# EUROPEAN PATENT SPECIFICATION

(11) **EP 0 845 662 B1**
(45) Date of publication and mention of the grant of the patent: **03.09.2003**
(21) Application number: 96850202.1
(22) Date of filing: 29.11.1996
(51) Int. Cl.: G01F 1/80

(54) **Apparatus for measuring the mass rate of flow**
Vorrichtung zur Massendurchflussmessung
Dispositif pour mesurer un débit massique

(43) Date of publication of application: 03.06.1998
(73) Proprietor: S.E.G. Mekanik AB, 66294 Amal (SE)
(72) Inventor: Söderholm, Arne, S-167 67 Bromma (SE); Söderholm, Olle, S-161 55 Bromma (SE)
(74) Representative: Karlström, Lennart

(56) References cited:
- EP-A- 0 146 902
- EP-A- 0 474 121
- EP-A- 0 537 765
- WO-A-92/08958
- DE-B- 1 211 415
- US-A- 2 771 773
- US-A- 2 832 218

## Description

This invention relates to apparatus for measuring fluent material, i.e. for detecting the rate of flow of such material as is delivered to and through the apparatus. By fluent material is meant divided solids, liquids and semiliquid or like substances having free-flowing characteristics.

Examples of such material, which the apparatus of the invention is specially adapted to measure, are grain, flour, dry chemicals, other finely divided solids of powdered, granular or like character.

The present invention consists of a flowmeter of the type in which mass flow rate is made responsive to Coriolis force. The particles to be measured are subjected to tangential acceleration in a whirling impeller, the torque exerted on the vanes of the impeller in reaction to the Coriolis force of accelerated particles being measured as an indication of the mass flow rate.

By measuring the torque and speed of rotation of the shaft the flow can be measured. Usually these values are transduced to electrical quantities as a measure of the flow. The flow is equal to torque divided by the speed of rotation of the shaft and that is easy with today's technology. The time integral of the flow gives the total mass, which has flowed past the impeller.

An example of a known construction is the US patent No. 2,771,773. In the patent US No. 2,832,218 the theoretical background is given and in EP 0 146 902 A2 the deduction of the equation is included. The equation is the mass flow q = M / n (R₂²-R₁²) where M = torque, n = axis speed of rotation, R₂ = outer radius of the impeller, and R₁ = inner radius from which the particles or the flow meet the impeller surface in or around its centre.

The principal object of the present invention is to minimize errors of measurement in a Coriolis type of flowmeter. Another object of the present invention is to provide a simple, reliable mechanical construction.

According to the equation above there are no correction constants which are depending of the properties of the material which is passing the impeller or the shape of the impeller. However, the inner radius (R₁) is assumed to be a constant. This means that the particles are meeting the impeller at the same distance from the centre of the axis or just at the centre (R₁ = 0). When the material flow is coming down to the impeller the particles are distributed over the impeller surface. If the inlet tube to the impeller is straight and long enough the distribution of the material. particles probably will have a constant distribution even if the flow rate changes.

If the inlet tube happens to have a ben d just near the impeller or if the material flow is pulsating because of coming from a screw conveyor, the inlet tube is not filled over the area and instead for instance following one side of the tube at a certain flow rate and gradually moving it's area-centre in the direction to the centre of the tube when the flow rate is increasing. Hereby, R₁ will change.

A method to reduce this measuring error is known from the US patent No. 2,832,218 where two coworking impellers are used for a mass flowmeter for fluids. Because of the mechanical construction required, that principle is hardly applicable for dry solids.

It is the object of this invention to reduce the error from the changing flow distribution, to reduce other sources of errors coming up when handling the material and thereby reducing traceable measuring errors of mass flow meters.

[The device of the invention comprise an impeller on an axis, which is driven of a motor, which rotary speed is measured. On the upper side of the impeller an inlet tube is ending. Inside this tube a fluid distributing device is situated with the purpose of symmetrilizing or stabilizing the position of the fluid area of the fluid before it meets the impeller and keeping the distribution independent of the flow rate.]

The device of the invention comprises an impeller wheel mounted on a shaft, which is driven by a motor, the rotary speed of which is measured, onto which impeller the material flow is charged into a central area in a direction parallel to said shaft or in a certain angle to that and the material proceed radially redirected, and the torque required for the rotation of the impeller is measured by means of a torque measuring device. According to the invention an inlet tube for the material is provided with a flow distributing device inside the tube with the purpose of distributing the material to or around the centerpoint of the center part of the impeller, and the shaft of the impeller is provided with a spherical compliant bearing and the shaft of the motor is firmly connected to said impeller shaft, whereby the underside of the stator of the motor is resting against an axial bearing device, and a flexible flat string is extending between said stator and a force measuring transducer, so that the flexible flat string transmits rotational movement of the stator to the force measuring transducer.

Around the center upper part of the impeller and around the outside of the end of the inlet tube a ring can be placed to force all material to pass onto the impeller, thereby eliminating waste material. Around the impeller a frusto-conical flange can be placed to govern the outflying particles to such directions so they not bounce back into the impeller, thereby being weighed twice.

The frusto-conical flange is provided with a springy or momentum-absorbing surface, thereby reducing granules to get broken.

The shaft is provided with a minimum of friction in its bearing, thereby minimising its interference on the torque measuring and the transmission of the torque to the force measuring transducer is optimised.

The invention is described in Pigs. 1-4, in which:
**Fig. 1** shows a perspective view of the essential design of the apparatus according to the invention;
**Fig. 2** shows a cut through part of Fig. 1;
**Figs. 3 - 5** show examples of the flow distributing device;
**Figs. 6 and 7** show examples of the flow distribution when the flow hit the impeller; and
Fig. 8 is a schematic view of a complete flow meter embodying principles of the present invention.

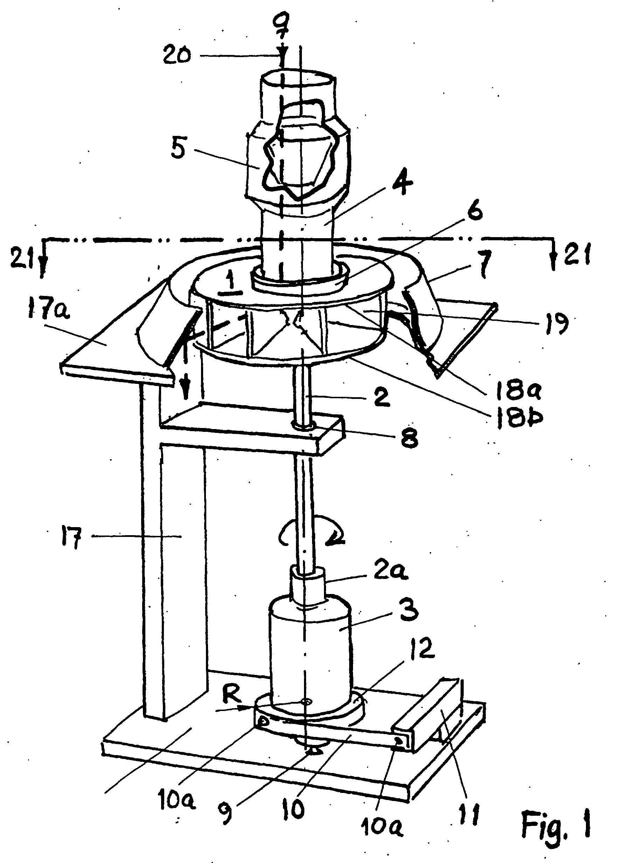

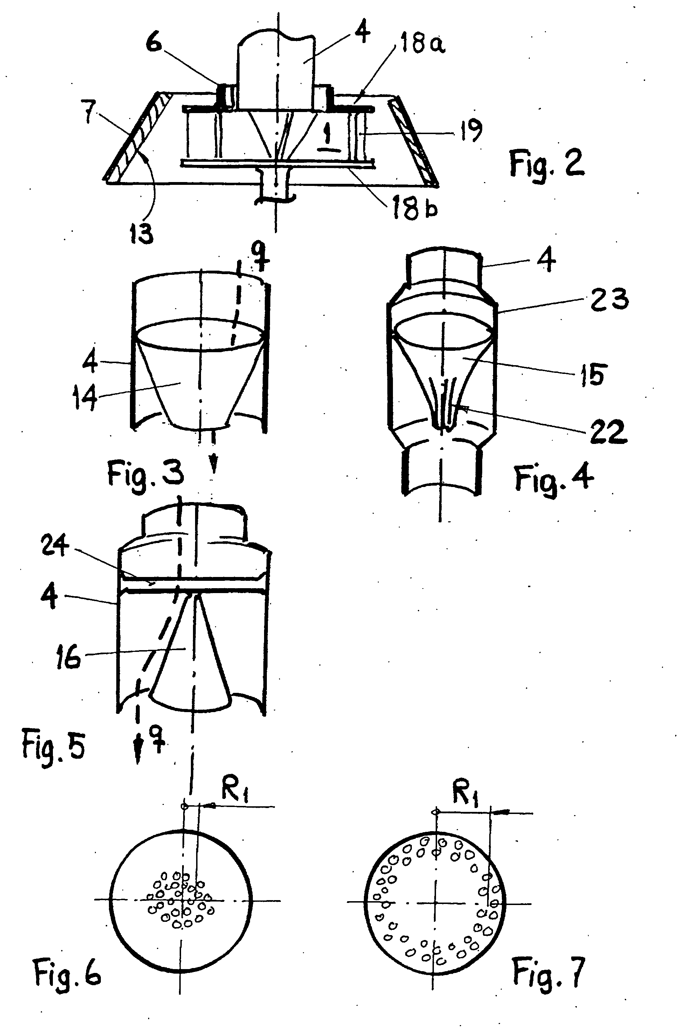

Fig. 1 shows the essential design of the device. The impeller wheel 1 with one upper plate 18a with a centrum hole, an under plate 18b and a number of vanes 19 between them is of known design. On the upper plate 18a a ring 6 is placed to prevent material spillage. The impeller 1 has a shaft 2 which is goverened by the bearing 8 and in the end of an axial bearing 9. The bearings are fastened to the frame 17. At the end of the shaft a joint 2a is fastening the motor 3, which is rotatably mounted by a concentric roundel 12 with the radius R. Via a flat string 10 the force measuring transducer 11 of known design is connected. The string is to be flexible and is fastened at its ends by screws 10a . The flexible 10 is connected in a way so that it is following the circumference of the roundel 12 to extend tangentially toward the force measuring transducer so that the flexible flat string 10 freely and without bending moments connect the force measuring transducer 11 in a tangential direction relative the radius R of the roundel 12. The transducer is giving an electric output signal proportional to the force applied. In this application the signal is the torque on the impeller. Above the impeller is an inlet tube 4, the diameter of which is less than that of the ring 6. Inside the inlet tube a flow distributing device 5 is situated. The way the material flow (q) through the flow meter is shown by the dotted line 20, where the radial direction along the impeller vanes 19 is the distance where the Coriolis force arise. Around the impeller a frusto-conical flange 7 is situated. The flange is fastened on a shelf 17a on the frame 17. The flange breaks the material flow downward. The cut 21 - 21 is a section through the impeller wheel shown in Fig. 2.

Fig. 2 shows the details around the impeller 1. The" impeller 1 and the inlet tube 4 are in the center and all around them is the frusto-conical flange 7, cut in this view, with a springy or momentum absorbing layer. The frusto-conical flange 7 preferably is made of a stiff material, with a soft inside 13 towards the impeller 1.

Figs. 3 -5 are examples of different designs of the flow distributing device 5.

Fig. 3 shows the inlet tube cut so the conically shaped insert 14 is seen. The material flow is forced from the sides of the tube to its centre, thereby minimising the changing of the centre of the distribution of the material flow when hitting the impeller.

Fig. 4 is a variant of the construction of Fig. 3, but where insert 15 is made of a compliant material so the opening widen proportional to the flow rate. The material is dovetailed 22 to get maximum of weakness. The inlet tube is provided with an extended diameter 23 along the insert area to eliminate reduction of flow rate.

Fig. 5 shows contrary to Figs. 3 and 4 a conically shaped insert 16 with its apex meeting the flow and forcing the material to spread out along the sides of the inlet tube. The insert is fastened to a lath 24 extending through the tube.

Figs. 6 and 7 are views of how the material hit the impeller surface. Fig. 6 corresponds to the circumstances illustrated in Figs. 3 and 4. The material area is marked with dots and the average value of the radius R₁ will be short and almost constant. Fig. 7 corresponds to the circumstances illustrated in Fig. 5. The material is spread out to a ring and R₁ will get a larger value [then] than in Fig. 6 but constant.

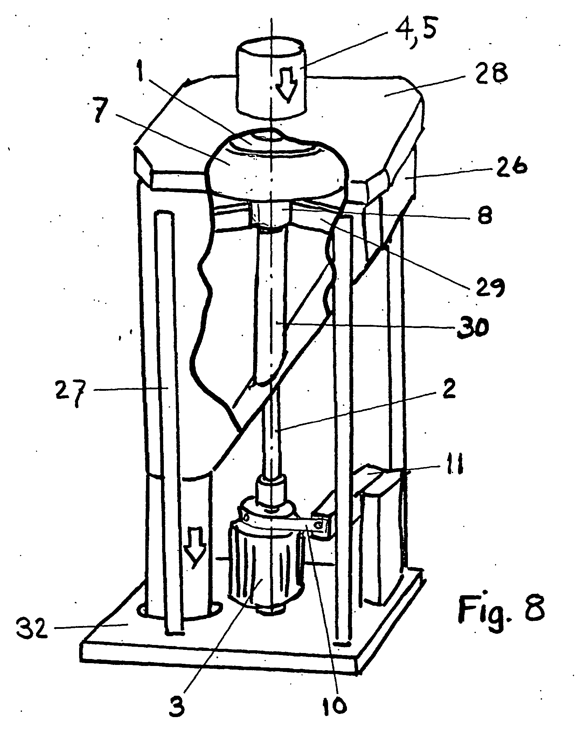

Fig. 8 is a schematic view of the flow meter. The motor 3 with the torque measuring details are placed on the bottom plate 32. The funnel formed encapsulating 26 is resting on pillars 31. In a cut out of the enclosure is shown the bearing 8 for the shaft 2 with a surrounding protecting tube 30 and stays 29 for the bearing. The inlet tube 4 with the flow distributing device 5 inside (not shown) is resting on the lid 28. The outlet tube 27 is a part of the funnel 26.

## Claims

1. Device for measuring a mass flow, in particular of a bulk material or a fluid, using the Coriolis measuring principle, comprising an impeller wheel (1) on a shaft (2), which is driven by a motor (3), the rotary speed of which is measured, onto which impeller the material flow is charged into a central area in a direction parallel to said shaft (2) or in a certain angle to that and the material proceed radially redirected, and the torque required for the rotation of the impeller (1) is measured by means of a torque measuring device, **characterised in**
**that** an inlet tube (4) for the material is provided with a flow distributing device (5) inside the tube with the purpose of distributing the material to or around the center point of the center part of the impeller (1),
**that** the shaft (2) of the impeller is provided with a spherical compliant bearing (8) and that the shaft of the motor (3) is firmly connected to said impeller shaft (2),
**that** the underside of the stator of the motor (3) is resting against an axial bearing device (9),
and **that** a flexible flat string (10) is extending between said stator. and a force, measuring transducer (11) so that the flexible flat string transmits rotational movement of the stator to the force measuring transducer (11).

2. Device according to claim 1, **characterised in that** the flow distributing device (5) comprises a funnel (14; 15) whose smallest opening is directed in the direction of the material flow.

3. Device according to claim 2, **characterised in that** an opening (22) of the funnel (15) is elastic or compliant proportional to the flow rate.

4. Device according to claim 1, **characterised in that** the flow distributing device (5) has the shape of a cone (16) with the apex meeting the flow so that it spreads the material out along the sides of the inlet tube (4).

5. Device according to claim 1 - 4, **characterised in that** the flexible flat string (10) is connected to a roundel (12) or part of a roundel with a radius (R), said roundel being concentric relative the shaft (2) and mounting said motor (3), and the flexible flat string (10) being connected in a way so that it is following the circumference of the roundel (12) to extend tangentially towards the force measuring transducer so that the flexible flat string (10) freely and without bending moments connect the force measuring transducer (11) in a tangential direction relative to the radius (R) of the roundel (12).

6. Device according to any previous claim, **characterised in that** around the center part of the upper side of the impeller (1), around the inlet tube (4) a waste eliminating ring (6) is placed,
that around the impeller a loose or fixed frustoconical flange (7) is placed, and
that at least the inside of said flange is provided with a springy or momentum-absorbing surface (13).

7. Device according to claim 6, **characterised in that** the frusto-conical flange (7) is made of a stiff material with a soft inside (13) towards the impeller (1).

## Patentansprüche

1. Vorrichtung zur Massenflussmessung, insbesondere eines Schüttguts oder eines Fluids, unter Benutzung des Coriolis Messprinzips, mit einem Messrad (1) auf einem Schaft (2), das durch einen Motor (3) angetrieben ist und dessen Rotationsgeschwindigkeit gemessen wird, welches Messrad mit dem Materialfluss in einem mittleren Bereich in einer Richtung parallel zu dem Schaft (2) oder in einem bestimmten Winkel dazu beaufschlagt wird und das Material radial umgeleitet weiterfließt, und das Drehmoment, das für die Rotation des Messrads (1) erforderlich ist mittels einer Drehmoment-Messvorrichtung gemessen wird, **dadurch gekennzeichnet,**
**dass** ein Einlassrohr (4) für das Material mit einer Flussverteilungseinrichtung (5) im Inneren des Rohrs versehen ist, mit dem Ziel, das Material an oder um den Mittelpunkt des mittleren Teils des Messrads (1) herum zu verteilen,
**dass** der Schaft (2) des Messrads mit einem sphärisch nachgiebigen Lager versehen ist und dass der Schaft des Motors (3) fest mit dem Schaft (2) des Messrads verbunden ist,
**dass** die Unterseite des Stators des Motors (3) auf einer axialen Lagereinrichtung (9) aufsitzt,
und **dass** ein flexibler flacher Streifen (10) sich von dem Stator zu einem Kraftmessungswandler (11) erstreckt, so dass der flexible flache Streifen die Rotationsbewegung des Stators an den Kraftmessungswandler (11) überträgt.

2. Vorrichtung nach Anspruch 1, **dadurch gekennzeichnet, dass** die Flussverteilungseinrichtung (5) einen Trichter (14; 15) umfasst, dessen kleinste Öffnung in die Richtung des Materialflusses gerichtet ist.

3. Vorrichtung nach Anspruch 2, **dadurch gekennzeichnet, dass** eine Öffnung (22) des Trichters (15) proportional zur Flussrate elastisch oder nachgiebig ist.

4. Vorrichtung nach Anspruch 1, **dadurch gekennzeichnet, dass** die Flussverteilungseinrichtung (5) die Gestalt eines Kegels (16) hat, dessen Spitze sich mit dem Fluss trifft, so dass sie das Material entlang der Seitenwände des Einlassrohrs (4) nach außen verteilt.

5. Vorrichtung nach Anspruch 1 bis 4, **dadurch gekennzeichnet,dass** der flexible flache Streifen (10) mit einer runden Scheibe (12) oder dem Teil einer runden Scheibe mit einem Radius (R) verbunden ist, wobei die runde Scheibe konzentrisch zu dem Schaft (2) angeordnet ist und den Motor (3) trägt, und dass der flexible flache Streifen (10) in einer solchen Weise befestigt ist, dass er dem Umfang der runden Scheibe (12) folgt, um sich tangential zu dem Kraftmessungswandler (11) zu erstrecken, so dass der flexible flache Streifen (10) den Kraftmessungswandler (11) frei und ohne Biegemomente in einer tangentialen Richtung bezogen auf den Radius (R) der runden Scheibe (12) verbindet.

6. Vorrichtung nach einem der vorhergehenden Ansprüche,
**dadurch gekennzeichnet, dass** um den mittleren Teil der Oberseite des Messrads (1), um das Einlassrohr (4) ein Verlusteliminierungsring (6) angeordnet ist,
dass um das Messrad ein loser oder befestigter kegelstumpfförmiger Flansch (7) angeordnet ist, und
dass zumindest die Innenseite des Flansches mit einer federnden oder Impuls-absorbierenden Oberfläche (13) versehen ist.

7. Vorrichtung nach Anspruch 6, **dadurch gekennzeichnet, dass** der kegelstumpfförmige Flansch (7) aus einem starren Material mit einem dem Messrad (1) zugewandten weichen Inneren (13) gefertigt ist.

## Revendications

1. Dispositif pour mesurer un débit massique, en particulter d'une matière en vrac ou d'un fluide, en utilisant le principe de mesure de Coriolis, comprenant une roue d'accélérateur (1) montée sur un arbre (2) entraîné par un moteur (3) dont on mesure la vitesse de rotation, le débit de matière étant chargé sur l'accélérateur dans une zone centrale, dans une direction parallèle à l'arbre (2) ou formant un certain angle avec celui-ci, de façon que la matière avance en étant redirigée radialement, et le couple nécessaire pour l'entraînement en rotation de l'accélérateur (1) étant mesuré au moyen d'un dispositif de mesure de couple.
**caractérisé en ce qu'**
un tube (4) d'entrée de la matière est muni d'un dispositif de distribution de débit (5) placé à l'intérieur du tube dans le but de distribuer la matière au centre ou autour du centre de la partie centrale de l'accélérateur (1),
l'arbre (2) dé l'accélérateur est muni d'un palier sphérique souple (8) et l'arbre du moteur (3) est solidement relié à l'arbre (2) de l'accélérateur ; le côté inférieur du stator du moteur (3) repose contre un dispositif de palier axial (9), et
un cordon plat flexible (10) s'étend entre le stator et un transducteur de mesure de force (11) de façon que ce cordon plat flexible transmette le mouvement de rotation du stator au transducteur de mesure de force (11).

2. Dispositif selon la revendication 1,
**caractérisé en ce que**
le dispositif de distribution de débit (5) comprend une trémie (14 ; 15) dont la plus petite ouverture est dirigée dans la direction d'écoulement du débit de matière.

3. Dispositif selon la revendication 2,
**caractérisé en ce que**
l'ouverture (22) de la trémie (15) est élastique ou souple pour s'adapter proportionnellement au débit d'écoulement.

4. Dispositif selon la revendication 1,
**caractérisé en ce que**
le dispositif de distribution de débit (5) présente la forme d'un cône (16) dont le sommet va à la rencontre du débit d'écoulement de manière à étaler la matière le long des côtés du tube d'entrée (4).

5. Dispositif selon l'une quelconque des revendications 1 à 4,
**caractérisé en ce que**
le cordon plat flexible (10) est connecté à une rondelle (12) ou à une partie de rondelle de rayon (R), cette rondelle étant concentrique avec l'arbre (2) et servant de monture au moteur (3). le cordon plat flexible (10) étant connecté de façon qu'il suive la circonférence de la rondelle (12) pour s'étendre tangentiellement vers le transducteur de mesure de force, de sorte que ce cordon plat flexible (10) connecte librement et sans moments de courbure le transducteur de mesure de force (11) à la rondelle (12) dans une direction tangentielle par rapport au rayon (R) de la rondelle (12).

6. Dispositif selon l'une quelconque des revendications précédentes,
**caractérisé en ce qu'**
un anneau de suppression de déchets (6) est placé autour du tube d'entrée (4), autour de la partie centrale du côté supérieur de l'accélérateur (1);
une collerette troncpnique (7) est montée de façon lâche ou fixe autour de l'accélérateur ; et
au moins l'intérieur de la collerette est muni d'une surface élastique ou d'absorption d'impulsions (13).

7. Dispositif selon la revendication 6,
**caractérisé en ce que**
la collerette tronconique (7) est réalisée dans un matériau rigide avec un revêtement intérieur souple (13) tourné vers l'accélérateur (1).
